Europäisches Patentamt

European Patent Office

Office européen des brevets

(11) Veröffentlichungsnummer: **0 169 486**

A2

(12) **EUROPÄISCHE PATENTANMELDUNG**

(21) Anmeldenummer: 85108907.8

(22) Anmeldetag: 16.07.85

(51) Int. Cl.⁴: **B 01 D 21/24**

(30) Priorität: 24.07.84 DE 3427298

(43) Veröffentlichungstag der Anmeldung:
29.01.86 Patentblatt 86/5

(84) Benannte Vertragsstaaten:
DE FR GB NL

(71) Anmelder: GEA Wiegand GmbH
Einsteinstrasse 9 - 15
D-7505 Ettlingen(DE)

(72) Erfinder: Findling, Josef
Karl-Friedrich-Strasse 16
D-7505 Ettlingen(DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Möhlstrasse 22
D-8000 München 80(DE)

(54) Vorrichtung zur Verteilung einer Flüssigkeit in einem Verteilerraum auf einen mit Durchbrechungen versehenen Boden.

(57) Vorrichtung zur Verteilung einer aus einem Ende eines Zuführungsrohrs in einen Verteilerraum eintretenden Flüssigkeit auf einen den Verteilerraum unten begrenzenden, mit Durchbrechungen versehenen Boden, insbesondere Rohrboden oder Schlitzboden, gekennzeichnet durch wenigstens eine in dem Verteilerraum in Abstand von dem Ende des Zuführungsrohrs angeordnete Prallplate, die auf sie treffende Flüsigkeit zu an ihrem unteren Rand befindlichen, abwechselnd nach beiden Seiten gekrümmten Schränklappen umlenkt.

FIG. 1

EP 0 169 486 A2

Die Erfindung betrifft eine Vorrichtung nach dem Oberbegriff des Anspruchs 1.

Eine nach der CH-PS 314 338 bekannte Vorrichtung dieser Art weist eine konische Prallplatte auf, auf die die Mündung des Zuführungsrohrs exzentrisch gerichtet ist. Die konische Prallplatte lenkt die auf sie treffende Flüssigkeit zu Schlitzen in einer Vorkammer, die den freien Endbereich des Zuführungsrohrs umschließt.

Aufgabe der Erfindung ist es, den aus dem Zuführungsrohr austretenden Strom der Flüssigkeit mit einfachen Mitteln aufzureißen und gleichmäßig über den Boden zu verteilen.

Die Lösung dieser Aufgabe ist im Kennzeichen des Anspruchs 1 angegeben.

Eine Vorrichtung nach der Erfindung gestattet es, stark verschmutzte Flüssigkeiten, insbesondere Flüssigkeiten mit Feststoffanteilen, auch solche, die zur Belagsbildung neigen, ohne Verstopfungsgefahr zu verteilen. Die Flüssigkeitsströmung kann dabei stark sein. In ihrer Funktion ist die Vorrichtung dabei weitgehend unabhängig von der Stärke des Flüssigkeitsstroms. Ihre Herstellung ist wegen reiner Blechfertigung sehr einfach.

Eine zweistufige Ausbildung ist in Anspruch 2 angegeben.

Sinngemäß kann eine Ergänzung zu drei und mehr Stufen vorgenommen werden.

Die Ausführungsform nach Anspruch 3 gestattet, auch die Deckwand des Verteilerraums zur Verteilung heranzuziehen.

Schränkwinkel, die sich besonders geeignet haben, sind in den Ansprüchen 4 und 5 angegeben.

Die Erfindung wird im folgenden an Ausführungsbeispielen unter Hinweis auf die beigefügten Zeichnungen erläutert.

Fig. 1 zeigt schematisch einen Längsschnitt durch eine Ausführungsform mit einem vertikal von unten in den Verteilerraum eingeführten Zuführungsrohr, teilweise perspektivisch.

0169486

Fig. 2 zeigt im Schnitt und in Seitenansicht Schränklappen in einer bevorzugten Ausführungsform.

Fig. 3 zeigt schematisch das Schema der - zweistufigen -
        Ausführungsform nach Fig. 1.

Fig. 4 zeigt ein Schema einer dreistufigen Ausführungsform.

Fig. 5 zeigt schematisch einen Längsschnitt durch eine
        Ausführungsform mit einem vertikal von oben in
        den Verteilerraum eingeführten Zuführungsrohr.

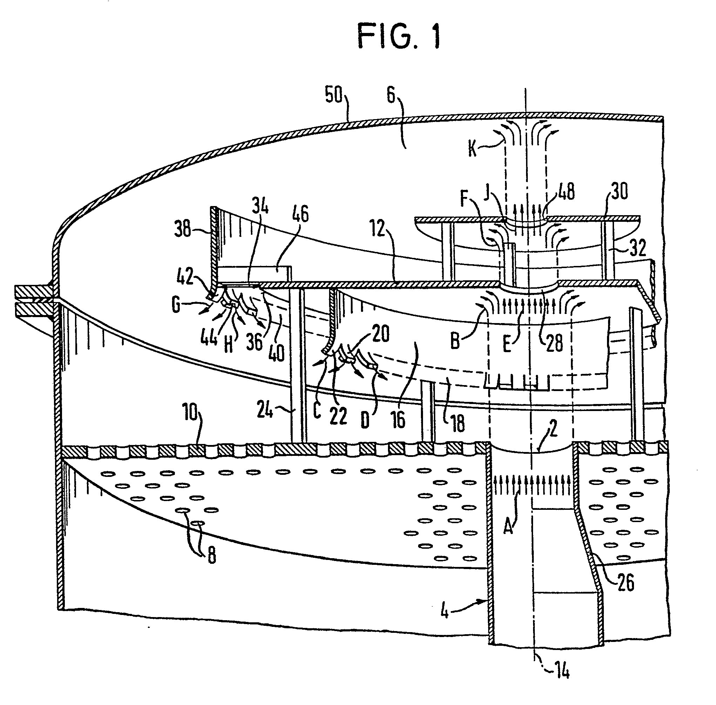

Die Vorrichtung nach Fig. 1 dient zur Verteilung einer aus
einem oberen Ende 2 eines Zuführungsrohrs 4 in einen Verteilerraum 6 eintretenden Flüssigkeit auf einen das Zuführungsrohr 4 umschließenden, den Verteilerraum 6 unten
begrenzenden, mit Durchbrechungen 8 versehenen Boden 10.
In dem Verteilerraum 6 ist über dem oberen Ende 2 des
Zuführungsrohrs 4 horizontal ein Deckel 12 angeordnet, an
dessen Unterseite sich ein die Achse 14 des Zuführungsrohrs
umschließender Kragen 16 befindet, dessen unterer Rand 18
in abwechselnd radial nach innen und außen gekrümmte
Schränklappen 20, 22 unterteilt ist. Der Deckel 12 ist
gegenüber dem Boden 10 mittels Stützen 24 abgestützt.

Das Zuführungsrohr 4 hat bei der links von der Achse 14
dargestellten Ausführungsform einen konstanten Durchmesser
über seine Länge, bei der rechts der Achse 14 dargestellten Ausführungsform kurz vor seinem oberen Ende 2 einen Abschnitt 26, der sich konisch verjüngt.

In dem Deckel 12 befindet sich über dem oberen Ende 2
des Zuführungsrohrs 4 ein Loch 28, dessen Querschnitt
kleiner als der des oberen Endes 2 des Zuführungsrohrs 4
ist. Über diesem Loch 28 ist ein zweiter Deckel 30 mittels
Stützen 32 auf dem Deckel 12 abgestützt. Der erste Deckel
12 ist oberseitig in radialem Abstand 34 von seinem Umfang
36 von einem zweiten Kragen 38 umschlossen, dessen unterer
Rand 40 ebenfalls in abwechselnd radial nach innen und außen
gekrümmte Schränklappen 42 und 44 unterteilt ist. Stützen 46
auf der Oberseite des Deckels 12, die den Umfang 36 des
Deckels 12 überragen, halten den zweiten Kragen 38 fest.
In dem zweiten Deckel 30 befindet sich über dem Loch 28
im ersten Deckel 12 ein Loch 48, dessen Querschnitt kleiner
ist als der des Lochs 28 im ersten Deckel 12.

In Richtung der Pfeile A strömt die Flüssigkeit aus dem
oberen Ende 2 des Zuführungsrohrs 4 in den Verteilerraum 6
ein. Ein Teil des Stroms der Flüssigkeit trifft auf die
Unterseite des Deckels 12 um das Loch 28 herum und wird in
Pfeilrichtung B radial nach außen umgelenkt. Einige Flüssigkeit tropft sogleich herunter; der Rest sammelt sich am
Kragen 16, fließt den Kragen 16 hinunter und wird durch die
Schränklappen 20, 22 radial nach außen und innen in Richtung der Pfeile C und D geleitet, somit auf die Durchbrechungen 8 verteilt.

Die nicht in Pfeilrichtung B umgelenkte Flüssigkeit durchströmt das Loch 28 in Pfeilrichtung E. Wiederum wird die
in Pfeilrichtung E strömende Flüssigkeit durch den Deckel
30 wie durch den Deckel 12 aufgeteilt. Ein Teil der Flüssigkeit wird an der Unterseite des Deckels 30 um das Loch
48 herum in Pfeilrichtung F abgelenkt und trifft schließlich auf den Kragen 38, von dem sie nach unten über die
Schränklappen 42, 44 in Pfeilrichtung G und H abfließt.
Der Rest der Flüssigkeit strömt durch das Loch 48 in Pfeilrichtung I an die Deckwand 50 des Verteilerraums 6 und
wird dort radial in Richtung der Pfeile K umgelenkt.
Insgesamt erhält man eine verhältnismäßig gleichmäßige
Verteilung der Flüssigkeit auf die Durchbrechungen 8.
Es liegt im Ermessen des Fachmanns, eine geeignete
Dimensionierung der die Aufteilung und Umlenkung der
Flüssigkeit bewirkenden Bauteile vorzunehmen.

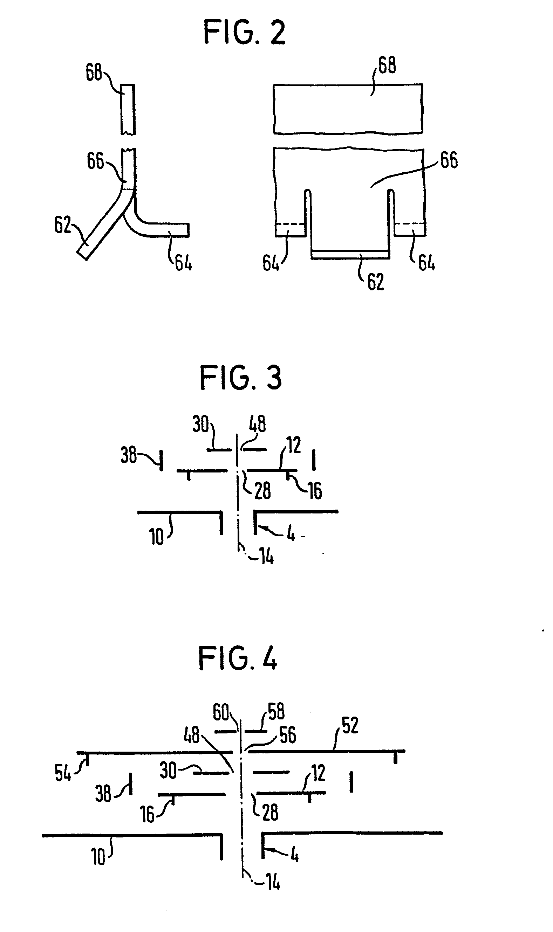

Fig. 3 zeigt unter Verwendung von Bezugsziffern, die zur
Beschreibung der Fig. 1 verwendet wurden, das Schema der
Fig. 1 (zweistufig).

Fig. 4 zeigt entsprechend schematisch eine dreistufige
Anordnung. Zusätzlich zu der Anordnung nach Fig. 3 ist
noch ein weiterer Deckel 52 vorgesehen, der einen größeren Durchmesser hat als der Deckel 12 und an dessen Unterseite sich ein Kragen 54 befindet, der radial außerhalb
des Kragens 38 liegt. In dem Deckel 52 ist ein Loch 56
koaxial zum Loch 48 mit kleinerem Durchmesser als das
Loch 48 vorgesehen. Über dem Deckel 52 befindet sich ein
weiterer Deckel 58 mit einem Loch 60, dessen Durchmesser
kleiner ist als der des Lochs 56.

Fig. 2 zeigt links einen radial nach außen gerichteten
Schränkwinkel eines Schränklappens 62 von 40° und radial
nach innen gerichtete Schränkwinkel eines Schränklappens
64 von 90°. Beide Schränklappen 62, 64 gehen von einem
unteren Rand 66 eines Kragens 68 aus und sind offensichtlich durch reine Blechbearbeitung herzustellen.

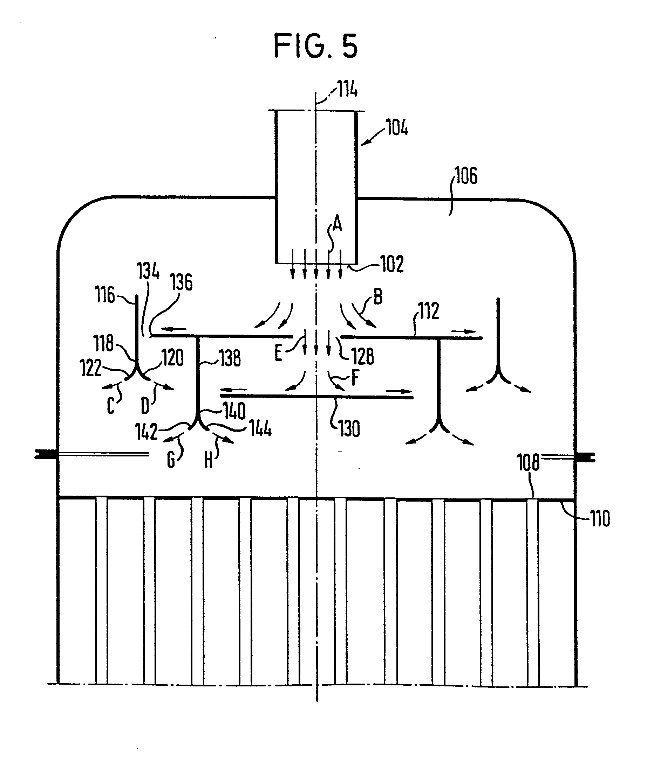

Die in Fig. 5 gezeigte Vorrichtung entspricht derjenigen
nach Fig. 1 mit Ausnahme des von oben in den Verteilerraum 106 eingeführten Zuführungsrohrs 104. Aus diesem
Grunde sind diejenigen Elemente, die funktionell denen
der Fig. 1 entsprechen, mit um 100 erhöhten Bezugsziffern
versehen und eine weitere Beschreibung erübrigt sich.

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA, DIPL.-PHYS. DR. J. PRECHTEL

8000 MÜNCHEN 86
POSTFACH 860 820
MÜHLSTRASSE 22
TELEFON (089) 98 03 52
TELEX 5 22 621
TELEGRAMM PATENTWEICKMANN MÜNCHEN

Patentansprüche

1. Vorrichtung zur Verteilung einer aus einem Ende (2;
1o2) eines Zuführungsrohrs (4; 1o4) in einen Verteilerraum (6; 1o6) eintretenden Flüssigkeit auf einen
den Verteilerraum (6; 1o6) unten begrenzenden, mit
Durchbrechungen (8; 1o8) versehenen Boden (1o; 11o),
insbesondere Rohrboden oder Schlitzboden, mit einer
in dem Verteilerraum (6; 1o6) in Abstand von dem Ende
(2; 1o2) des Zuführungsrohrs (4; 1o4) angeordneten
Prallplatte, die die auf sie treffende Flüssigkeit
zu ihrem Rand hin umlenkt, dadurch gekennzeichnet,
daß die Prallplatte aus einem in dem Verteilerraum
(6; 1o6) in Abstand von dem Ende (2; 1o2) des Zuführrungsrohrs (4; 1o4) angeordneten Deckel (12; 112) besteht, der die auf ihn durch das Zuführungsrohr (4;
1o4) treffende Flüssigkeit zu einem die Achse (14;
114) des Zuführungsrohrs (4; 1o4) umschließenden Kragen (16; 116) umlenkt, an dessen unterem Rand (18; 118)
sich abwechselnd nach beiden Seiten gekrümmte Schränklappen (2o, 22, 142, 144) befinden.

2. Vorrichtung nach Anspruch 1, dadurch gekennzeichnet,
daß sich in dem Deckel (12; 112) gegenüber dem Ende
(2; 1o2) des Zuführungsrohrs (4; 1o4) ein Loch (28;
128) befindet, dessen Querschnitt kleiner als der des
Zuführungsrohrs (4; 1o4) ist, und daß sich in Abstand von der dem Zuführungsrohr (4; 1o4) abgewandten Seite
des Deckels (12; 112) ein zweiter Deckel (3o;13o) befindet, der auf ihn durch das Loch (28; 128) treffende
Flüssigkeit zu einem die Achse (14; 114) des Zuführungsrohrs (4; 1o4) umschließenden zweiten Kragen (38; 138)
umlenkt, an dessen unterem Rand (4o; 14o) sich Schränklappen (42, 44, 142, 144) befinden.

3. Vorrichtung nach Anspruch 2, dadurch gekennzeichnet,
daß sich in dem zweiten Deckel (3o) gegenüber dem Loch
(28) des ersten Deckels (12) ein Loch (48) befindet,
dessen Querschnitt kleiner als der des Lochs (28) im
ersten Deckel (12) ist.

4. Vorrichtung nach einem der Ansprüche 1 bis 3, dadurch
gekennzeichnet, daß der Schränkwinkel der radial
nach innen gebogenen Schränklappen (64) größer ist als
der Schränkwinkel der radial nach außen gebogenen
Schränklappen (62).

5. Vorrichtung nach Anspruch 4, dadurch gekennzeichnet,
daß der größere Schränkwinkel 8o° bis 1oo°, vorzugsweise etwa 9o°, und der kleinere Schränkwinkel 3o°
bis 5o°, vorzugsweise etwa 4o°, betragen.

# FIG. 1

## FIG. 2

## FIG. 3

## FIG. 4

0169486

# FIG. 5